# EUROPÄISCHE PATENTSCHRIFT

(11) **EP 3 468 339 B1**
(45) Veröffentlichungstag und Bekanntmachung des Hinweises auf die Patenterteilung: **13.04.2022**
(21) Anmeldenummer: 17727622.7
(22) Anmeldetag: 08.06.2017
(51) Int. Cl.: A01B 79/00, A01B 79/02

(54) **VERFAHREN ZUR ERMITTLUNG VON PFLANZENEIGENSCHAFTEN EINER NUTZPFLANZE**
METHOD FOR DETERMINING THE CROP PROPERTIES OF AN AGRICULTURAL CROP
PROCEDE DE DETERMINATION DE CARACTERISTIQUES D'UNE PLANTE UTILE

(30) Priorität: 09.06.2016 EP 16173692
(43) Veröffentlichungstag der Anmeldung: 17.04.2019
(73) Patentinhaber: BASF SE, 67056 Ludwigshafen am Rhein (DE)
(72) Erfinder: PETERS, Ole, 40217 Düsseldorf (DE)
(74) Vertreter: BASF IP Association
(86) Internationale Anmeldenummer: PCT/EP2017/063954
(87) Internationale Veröffentlichungsnummer: WO 2017/211948

(56) Entgegenhaltungen:
- EP-A1- 2 586 286
- EP-A1- 2 764 764
- WO-A1-2016/025848
- US-A1- 2012 109 614

## Beschreibung

Die Erfindung betrifft ein Verfahren, ein System und ein Computerprogrammprodukt zur Ermittlung einer Pflanzeneigenschaft einer Nutzpflanze in einem Feld.

Um einen maximalen Ertrag der Nutzpflanze bei geringem Ressourceneinsatz erzielen zu können, ist eine möglichst genaue Kenntnis über den Stand und die Entwicklung der Nutzpflanze notwendig, um gegebenenfalls auf den Wachstumsprozess durch geeignete Maßnahmen wie Bewässerung, Nährstoffversorgung und/oder die Applikation von Pflanzenschutzmitteln einzuwirken. Dabei zeigt sich, dass durch eine räumliche oder georeferenzierte Differenzierung von geeigneten Maßnahmen die Ressourcen besonders effizient eingesetzt werden können. Entsprechend sind eine Vielzahl von Sensoren und Entscheidungsalgorithmen bekannt, die auf Basis der Messergebnisse der Sensoren eine bestimmte landwirtschaftliche Maßnahme vorschlagen.

Beispielsweise verweist das Forschungsinformationssystem Agrar/Ernährung (FISA), ein Informationsportal der Bundesrepublik Deutschland und deren Länder, auf ein von der Universität Hohenheim durchgeführtes Projekt zur Realisierung einer echtzeitfähigen Messvorrichtung zur teilflächenspezifischen Herbizidausbringung. Die Messvorrichtung besteht dabei aus mehreren Kameras mit integrierter Bildverarbeitung und Objekterkennung sowie einem Bedienterminal. Die Kameras sind mit Auslegern am Gestänge einer Feldspritze befestigt. Während der Fahrt durch den Kulturbestand nehmen die Kameras kontinuierlich Bilder auf. Die jeweils im Bild erkennbaren Pflanzen bzw. Pflanzenteile werden ausgewertet und entsprechenden Klassifikatoren zugeordnet. Durch die im Bedienterminal hinterlegten Algorithmen für bestimmte Bestands- und Ausbringsituationen wird schließlich in Echtzeit entschieden, ob die Feldspritze an der jeweiligen Stelle aktiviert wird bzw. welche Aufwandmenge nötig ist. So ist die ganzflächige Ausbringung von Herbiziden im Ackerbau nicht mehr notwendig, vielmehr können die Herbizide nur noch auf tatsächlich verunkrautete Teilflächen ausgebracht werden. Jedoch besteht ein Bedarf, die Messvorrichtung beispielsweise hinsichtlich einer robusteren Erkennung von Pflanzen bei zum Teil sehr unterschiedlichen landwirtschaftlichen Umgebungen und Zuständen zu verbessern.

Von dem Unternehmen Yara wird der sogenannte N-Sensor angeboten, der das vom Pflanzenbestand reflektierte Sonnenlicht misst und analysiert. Durch gleichzeitige Messung des direkt einfallenden Sonnenlichts werden unterschiedliche Lichtverhältnisse kompensiert. Das vom Sensor erfasste Licht wird an ein Spektrometer übermittelt, spektral zerlegt und analysiert. In bestimmten Spektralbändern werden die Reflexionseigenschaften des Pflanzenbestands vom Stickstoff-Ernährungszustand beeinflusst. Aus den Reflexionseigenschaften lässt sich somit grundsätzlich auf den augenblicklichen Stickstoffgehalt und daraus auf den zukünftigen Stickstoffbedarf schließen, wobei der N-Sensor zuvor aber einer aufwändigen Kalibrierung bedarf.

Selbst bei erfolgter Kalibrierung produziert der N-Sensor nur bedingt taugliche Werte für die Entscheidung, welche Menge an Stickstoff für das weitere Wachstum der Nutzpflanze notwendig ist. Wenn beispielsweise eine zweite Stickstoffgabe erfolgen soll, so bleibt beim Einsatz des N-Sensors regelmäßig die aus einer ersten Stickstoffabgabe noch anteilig im Boden befindliche Stickstoffmenge unberücksichtigt. Basierend auf den Messergebnissen des N-Sensors wird dann eine zu hohe Auftragsmenge für eine zweite Stickstoffgabe ermittelt. Dies zeigt, dass die Bewertung von Messergebnissen und deren Verwendung als Basis für landwirtschaftliche Maßnahmen sehr komplex ist und erhebliches lokales Expertenwissen zu den räumlich sehr unterschiedlichen Umweltbedingungen erfordert.

Die WO2016/025848 beschreibt ein mobiles Analysesystem mit einer mobilen Plattform, das ein Feld mit mehreren Parzellen und Pflanzen queren kann. Einem Datenverarbeitungssystem, mit einem Datenerfassungsgerät für das Erfassen von Daten in Echtzeit und dem kommunizieren von Daten in Echtzeit and das Datenverarbeitungssystem. Einem Ortungssystem für das Erfassen von Standortdaten der mobilen Daten beim durchqueren des Feldes und von Ortsdaten einer Feldgrenze, einer Parzellengrenze und einer Pflanze in diesem Feld und dieser Parzelle. Das Datenverarbeitungssystem kann die erfassten Daten in Echtzeit empfangen speichern und analysieren und speichern der Standortdaten mit erfassten Daten.

Der Erfindung liegt daher die Aufgabe zu Grunde, die Messgüte bzw. die Aussagekraft von Messwerten einer Messvorrichtung bei der Ermittlung einer Pflanzeneigenschaft zu verbessern.

Die der Erfindung zu Grunde liegende Aufgabe wird durch die Gegenstände der unabhängigen Ansprüche 1, 12 und 14 gelöst. Bevorzugte Ausführungsformen finden sich in den abhängigen Ansprüchen und in der vorliegenden Beschreibung.

Ein erster Gegenstand der vorliegenden Erfindung ist somit ein Verfahren umfassend die Schritte
- Bewegen einer Messvorrichtung durch oder über ein Feld, in dem Nutzpflanzen angebaut werden, wobei die Messvorrichtung einen Sensor und ein Positionsbestimmungssystem umfasst
- Erfassen von Rohmesswerten bezüglich einer Pflanzeneigenschaft der Nutzpflanzen mit Hilfe des Sensors unter gleichzeitiger Bestimmung der Position der Messvorrichtung in oder über dem Feld mit Hilfe des Positionsbestimmungssystems
- Bereitstellen einer digitalen Karte des Feldes, in der teilflächenspezifisch Werte für mindestens eine Eigenschaft des Feldes verzeichnet sind,
- Identifizieren des/der zu einem erfassten Rohmesswert in Bezug auf die Position korrespondierenden Werts/Werte der digitalen Karte
- Ermitteln eines kalibrierten oder korrigierten Wertes für die Pflanzeneigenschaft aus dem erfassten Rohmesswert und dem/den korrespondierenden Wert/Werten der digitalen Karte.

Ein weiterer Gegenstand der vorliegenden Erfindung ist ein System umfassend
- eine Messvorrichtung mit einem Sensor und einem Positionsbestimmungssystem, wobei die Messvorrichtung so ausgestaltet ist, dass sie sich über oder durch ein Feld, in dem Nutzpflanzen angebaut werden, bewegt, dabei mittels des Sensors Rohmesswerte zu einer Pflanzeneigenschaft der Nutzpflanzen erfasst und gleichzeitig die Position der Messvorrichtung in oder über dem Feld mit Hilfe des Positionsbestimmungssystems bestimmt,
- eine Speichereinheit, in der eine digitale Karte des Feldes gespeichert ist, wobei in der digitalen Karte teilflächenspezifisch Werte für mindestens eine Eigenschaft des Feldes verzeichnet sind, und
- eine Computereinheit, die so konfiguriert ist, dass sie
   - einen Rohmesswert von der Messvorrichtung zusammen mit den Koordinaten der Position, an der sich die Messvorrichtung zum Zeitpunkt der Erfassung des Rohmesswerts befunden hat, empfängt
   - den zum Rohmesswert korrespondierenden Wert der digitalen Karte identifiziert, und
   - aus dem Rohmesswert und dem korrespondierenden Wert der digitalen Karte einen kalibrierten oder korrigierten Wert für die Pflanzeneigenschaft berechnet.

Ein weiterer Gegenstand der vorliegenden Erfindung ist ein Computerprogrammprodukt umfassend einen computerlesbaren Datenträger und Programmcode, der auf dem Datenträger gespeichert ist, und der beim Ausführen auf einem Computer den Computer dazu veranlasst,
- von einer Messvorrichtung einen Rohmesswert bezüglich einer Pflanzeneigenschaft einer Nutzpflanze in einem Feld und die Koordinaten derjenigen Position im oder über dem Feld zu empfangen, an der sich die Messvorrichtung zum Zeitpunkt der Erfassung des Rohmesswertes mit Hilfe eines Sensors befunden hat,
- einen zu dem Rohmesswert korrespondierenden Wert einer Eigenschaft des Feldes von einer digitalen Karte des Feldes zu identifizieren, und
- aus dem Rohmesswert und dem korrespondierenden Wert einer Eigenschaft des Feldes einen kalibrierten oder korrigierten Wert für die Pflanzeneigenschaft zu berechnen.

Die Erfindung wird nachstehend näher erläutert, ohne zwischen den Erfindungsgegenständen (Verfahren, System, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, System, Computerprogrammprodukt) sie erfolgen.

Bei dem erfindungsgemäßen Verfahren wird eine Messvorrichtung durch oder über ein Feld, in dem Nutzpflanzen angebaut werden, bewegt.

Unter dem Begriff "Feld" wird ein räumlich abgrenzbarer Bereich der Erdoberfläche verstanden, der landwirtschaftlich genutzt wird, indem auf einem solchen Feld Nutzpflanzen angepflanzt, mit Nährstoffen versorgt und geerntet werden.

Unter dem Begriff "Nutzpflanze" wird eine Pflanze verstanden, die durch das Eingreifen der Menschen zielgerichtet als Nutz- oder Zierpflanze angebaut wird. Ein zum Begriff "Nutzpflanze" synonymer Begriff ist der Begriff "Kulturpflanze".

Die Messvorrichtung verfügt über ein Positionsbestimmungssystem, das es erlaubt, die jeweilige Position der Messvorrichtung in oder über dem Feld zu bestimmen. Bei dem Positionsbestimmungssystem handelt es sich vorzugsweise um ein satellitengestütztes Positionsbestimmungssystem. Das Global Positioning System (kurz GPS, offiziell NAVSTAR GPS) ist ein globales satellitengestütztes Positionsbestimmungssystem.

Die Messvorrichtung verfügt ferner über einen oder mehrere Sensoren, mit dem/denen Rohmesswerte bezüglich einer Pflanzeneigenschaft der in dem Feld angebauten Nutzpflanzen erfasst werden können. Wenn in dieser Beschreibung und den Ansprüchen von "einem Sensor" oder "dem Sensor" die Rede ist, so soll dies nicht einschränkend verstanden werden sondern stets so interpretiert werden, dass es auch mehrere Sensoren sein können. Analoges gilt insbesondere auch für Begriffe wie "Rohmesswert", "Pflanzeneigenschaft", "Wert" und "Eigenschaft eines/des Feldes".

Vorzugsweise arbeitet der Sensor berührungslos.

Bei dem erfindungsgemäßen Verfahren wird durch die Messvorrichtung mit Hilfe des Sensors ein Rohmesswert (oder mehrere Rohmesswerte) bezüglich einer Pflanzeneigenschaft ermittelt.

Die Pflanzeneigenschaft kann sich dabei auf die Nutzpflanze direkt beziehen wie beispielsweise die Sorte, die Höhe der Nutzpflanze oder die Korn- oder Strohfeuchte. Sie kann sich aber auch auf Umweltbedingungen oder Einflussfaktoren beziehen, die das Wachstum, die Gesundheit und/oder den möglichen Ertrag der Nutzpflanze beeinflussen können. Als Beispiel für Umweltbedingungen oder Einflussgrößen kann die Bodenfeuchte oder ein Unkrautbefall genannt werden. All diese direkten Eigenschaften oder die Umweltbedingungen/Einflussfaktoren sollen im Folgenden durch den Begriff "Pflanzeneigenschaft" erfasst sein.

Vorzugsweise handelt es sich bei der Pflanzeneigenschaft um eine Eigenschaft der Nutzpflanze selbst.

Ein erstes Beispiel für eine Pflanzeneigenschaft ist die Sorte der Nutzpflanze wie beispielsweise Weizen, Roggen, Gerste, Hafer oder Mais. Die Pflanzeneigenschaft kann sich auch auf das Wachstumsstadium der Nutzpflanze beziehen. Weitere Beispiele für Pflanzeneigenschaften sind: ein Stresslevel verursacht durch andere Nährstoffe und deren phänotypische Anzeichen, Wasserstress bzw. verbleibendes Wachstumspotential, Sonnenbrand durch UV-B Belastung, erwartete photosynthetische / metabolische Aktivität in den nächsten 48 h (bzw. in den nächsten x Stunden), Blattwinkel, oder Bestandshöhe.

Wie oben bereits ausgeführt, umfasst die Pflanzeneigenschaft nicht nur die Nutzpflanze direkt betreffende Eigenschaften, sondern auch Randbedingungen oder Umweltfaktoren, die Einfluss auf den Entwicklungsstand oder die zukünftige Entwicklung der Nutzpflanze (beispielsweise im Hinblick auf Ertrag) haben können. Beispiele solcher indirekten Eigenschaften sind vorhandene Unkrautspezies, das Wachstumsstadium vorhandener Unkräuter, Schlupfzeitpunkt von Schädlingen (Südhang früher als Nordhang) oder verbleibender Schutz von Pflanzenschutzmitteln aus früheren Anwendungen.

In einer bevorzugten Ausführungsform der vorliegenden Erfindung ist die Pflanzeneigenschaft der Stickstoffgehalt der Nutzpflanze.

In einer besonders bevorzugten Ausführungsform ist die Pflanzeneigenschaft der Gesamtstickstoffgehalt der Nutzpflanze einschließlich des (noch) im Boden befindlichen Stickstoffgehalts.

In einer weiteren bevorzugten Ausführungsform ist die Pflanzeneigenschaft das Wachstumsstadium der Nutzpflanze.

In einer weiteren bevorzugten Ausführungsform ist die Pflanzeneigenschaft ein Maß für die Menge (z.B. das Gewicht) der geernteten Nutzpflanze.

In einer weiteren bevorzugten Ausführungsform ist die Pflanzeneigenschaft das Wachstumsstadium eines Unkrauts.

In einer weiteren bevorzugten Ausführungsform ist die Pflanzeneigenschaft ein Maß für die Menge eines vorliegenden Unkrauts.

Die Messvorrichtung kann einen berührungslosen Sensor aufweisen, der beispielweise als optischer Sensor wie der oben beschriebene Yara N-Sensor oder der H-Sensor ausgebildet sein kann. Der optische Sensor kann dabei ein passiver Sensor sein, der mit Tageslicht arbeitet. Der Sensor kann dabei die direkte Sonneneinstrahlung messen, damit die durch unterschiedliche Lichtverhältnisse bedingten unterschiedlichen Messergebnisse richtig eingeordnet werden können. Der Sensor kann auch mit künstlichem Licht arbeiten, was seine Einsatzzeiten auch auf Nachtstunden ausweitet. Optische Sensoren sollen auch die Sensoren umfassen, die in nicht sichtbaren Wellenbereichen arbeiten wie beispielsweise ein NIR-Sensor. Der NIR-Sensor arbeitet im Bereich des kurzwelligen Infrarotlichts und kann für die Feuchtemessung der Nutzpflanze eingesetzt werden.

In einer anderen Ausführung arbeitet der Sensor nach dem Induktionsprinzip mit elektromagnetischen Wellen. Ein Beispiel dafür ist der Bodenscanner EM 38 des kanadischen Herstellers Geonics.

Die Messvorrichtung kann einen Sensor für die tatsächlich geerntete Nutzpflanze umfassen. Beispielsweise kann so das Gewicht des geernteten Korns gemessen werden, wobei ein Pflanzenwachstumsmodell beispielsweise Daten für die Kornfeuchte liefert. Aus dem Gewicht des geernteten Korns und der Kornfeuchte lässt sich dann ein kalibriertes, auf eine bestimmte Kornfeuchte normiertes Korngewicht ermitteln.

Der Sensor ist vorzugsweise auf einer Feldmaschine angebracht, die beispielsweise eine Auftragsmaschine für Pflanzenschutzprodukte oder Nährstoffe (zum Beispiel eine Feldspritze, Düngerstreuer, Kalkstreuer, Dungstreuer), ein Bodenbearbeitungsgerät, eine Sämaschine oder eine Pflanzmaschine sein kann. Unter Feldmaschine wird hier eine Einheit verstanden, die sich auch aus einem Schlepper und einem Anhänger/Aufsatz zusammensetzen kann.

Der Sensor kann auch an einem Satelliten zur Fernerkundung installiert sein. Beispielsweise lässt sich georeferenziert auf Basis von Satellitendaten ein Vegetationsindex (beispielsweise NDVI) berechnen, aus dem sich die Biomasse auf dem Feld ableiten lässt. Derartige Daten zum Vegetationsindex können einerseits als Grundlage für andere Pflanzeneigenschaften dienen, die über die Fernerkundung nicht erfasst werden können. Andererseits können die Fernerkundungsdaten dazu verwendet werden, bestimmte Annahmen bei der Modellierung des Pflanzenwachstums zu verifizieren und entsprechend anzupassen. Darüber hinaus ist es möglich, dass über die Fernerkundung auch die Feuchtigkeit des Bodens gemessen wird. Die Bodenfeuchte kann dabei bei der Berechnung des Wassergehalts des Bodens berücksichtigt werden.

Auch der Einsatz von Luftfahrzeugen (unbemannt (Drohnen) oder bemannt) zur Erfassung von Rohmesswerten ist denkbar.

Während die Messvorrichtung durch oder über das Feld bewegt wird (oder sich autonom bewegt), werden mit Hilfe des Sensors Rohmesswerte bezüglich einer Pflanzeneigenschaft erfasst. Gleichzeitig wird die jeweilige Position bestimmt, an der sich die Messvorrichtung zum Zeitpunkt der Erfassung eines Rohmesswertes befindet. Vorzugsweise werden die Rohmesswerte zusammen mit den Koordinaten der jeweiligen Position in einer Speichereinheit für digitale Daten gespeichert.

In einem weiteren Schritt des erfindungsgemäßen Verfahrens wird eine digitale Karte des Feldes bereitgestellt.

Der Begriff "digital" bedeutet, dass die Karte von einer Maschine, in der Regel einem Computersystem, verarbeitet werden kann. Unter "Verarbeitung" werden die bekannten Verfahren zur elektronischen Datenverarbeitung (EDV) verstanden.

In der digitalen Karte sind Werte für eine Eigenschaft des Feldes verzeichnet. Die digitale Karte ist teilflächenspezifisch, d.h., sie ist in eine Vielzahl von Teilflächen aufgeteilt und jede Teilfläche weist einen für die Teilfläche spezifischen Wert für eine Eigenschaft des Feldes auf.

Die Werte der digitalen Karte werden in dieser Beschreibung auch als "externe Daten" oder auch als "offline-Daten" bezeichnet.

Die externen Daten beziehen sich auf eine oder mehrere Eigenschaften des Feldes. Der Begriff "Eigenschaften des Feldes" ist breit zu verstehen. Er umfasst beispielsweise Eigenschaften des Bodens wie beispielsweise Stickstoffgehalt und Feuchte, Eigenschaften der auf dem Feld angebauten Nutzpflanzen, Ertragsdaten der Vergangenheit, modellierte Werte zum Pflanzenwachstum, Art und Menge von in der Vergangenheit auf dem Feld aufgebrauchten Pflanzenschutzmitteln und/oder Nährstoffen und dergleichen.

Bei den externen Daten oder offline-Daten soll es sich um Daten handeln, die sich nicht unmittelbar aus den Messwerten der Messvorrichtung ergeben. Die Quelle dieser externen Daten kann entsprechend unterschiedlicher Natur sein. Beispielsweise kann es sich um Daten handeln, die aus der Vergangenheit für die Nutzpflanze und/oder das Feld bekannt sind (beispielsweise der Ertrag der letzten Jahre) oder die für die aktuelle Wachstumsperiode angelegt worden sind (beispielsweise die Art der gesäten Getreidesorte). Auch kann es sich beispielsweise, um das obige Beispiel mit dem N-Sensor aufzugreifen, um den Zeitpunkt und die Menge einer ersten Stickstoffgabe handeln. Mit den externen Daten lässt sich somit ein gewisses Bild über die Nutzpflanze und die Rahmenbedingungen für die Nutzpflanze zeichnen, wobei dabei aber die aktuellen Messwerte der Messvorrichtung (online-Daten) nicht berücksichtigt sind. Die Erfindung sieht vor, die Relevanz und die Aussagekraft der online-Daten durch die geeignete Berücksichtigung von offline-Daten zu erhöhen.

Bei den externen Daten handelt es sich wie beschrieben um georeferenzierte Daten. Beispielsweise lässt sich das Feld in eine Vielzahl von Flächenelementen (Teilflächen) unterteilen, wobei für die einzelnen Flächenelemente (Teilflächen) spezifische Daten vorliegen. Diese georeferenzierten Daten können in Form von digitalen Karten in hoher räumlicher Auflösung von beispielsweise 100 x 100 m, 50 x 50 m oder 5 x 5 m vorliegen. Eine solche digitale Karte kann beispielsweise für jedes Flächenelement die Stickstoffmenge ausweisen, die an einem bestimmten Tag auf das Feld aufgetragen wurde. Die Daten für eine solche Karte lassen sich mit Hilfe einer Ausbringungsvorrichtung erfassen, die in Abhängigkeit des Orts die abgegebene Stickstoffmenge erfasst und abspeichert. Jedem Flächenelement kann hinsichtlich der Pflanzeneigenschaft auch nur eine qualitative Klasse beispielsweise "1, 2, 3 oder 4" oder "sehr klein, klein, mittel, groß, sehr groß" zugeordnet sein.

Die externen Daten können Ergebnisse eines Pflanzenwachstumsmodells sein, welches vorzugsweise für einen Zeitpunkt, an dem die Messvorrichtung den Rohmesswert für die Pflanzeneigenschaft ermittelt, wenigstens eine Eigenschaft des Feldes modelliert. So kann beispielsweise das Pflanzenwachstumsmodell den Stickstoffgehalt im Boden modellieren, wobei für diese Modellierung bereits getätigte Stickstoffgaben und das Wachstum der Nutzpflanze berücksichtigt werden können.

Unter dem Begriff "Pflanzenwachstumsmodell" wird ein mathematisches Modell verstanden, das das Wachstum einer Pflanze (vorzugsweise der angebauten Nutzpflanze) in Abhängigkeit von intrinsischen (Genetik) und extrinsischen (Umwelt) Faktoren beschreibt.

Pflanzenwachstumsmodelle existieren für eine Vielzahl an Nutzpflanzen.

Eine Einführung in die Erstellung von Pflanzenwachstumsmodellen bieten beispielsweise die Bücher i) "Mathematische Modellbildung und Simulation" von Marco Günther und Kai Velten, erschienen im Wiley-VCH Verlag im Oktober 2014 (ISBN: 978-3-527-41217-4), sowie ii) "Working with Dynamic Crop Models" von Daniel Wallach, David Makowski, James W. Jones und Francois Brun., erschienen 2014 in Academic Press (Elsevier), USA.

Das Pflanzenwachstumsmodell simuliert üblicherweise das Wachstum eines Bestands an Nutzpflanzen über einen definierten Zeitraum. Denkbar ist auch, ein Modell auf Basis einer einzelnen Pflanze zu verwenden, das die Energie- und Stoffflüsse in den einzelnen Organen der Pflanze simuliert. Es sind zudem Mischmodelle verwendbar.

Das Wachstum einer Nutzpflanze wird neben den genetischen Merkmalen der Pflanze vornehmlich durch die über die Lebensdauer der Pflanze herrschenden lokalen Witterungen (Quantität und spektrale Verteilung der einfallenden Sonnenstrahlen, Temperaturverläufe, Niederschlagsmengen, Windeintrag), dem Zustand des Bodens sowie das Nährstoffangebot bestimmt.

Auch die bereits erfolgten Kulturmaßnahmen und ein etwaig aufgetretener Befall mit Schadorganismen können einen Einfluss auf das Pflanzenwachstum ausüben und können in dem Wachstumsmodell berücksichtigt werden.

Die Pflanzenwachstumsmodelle sind i.d.R. sogenannte dynamische prozessbasierte Modelle (s. "Working with Dynamic Crop Models" von Daniel Wallach, David Makowski, James W. Jones und Francois Brun., erschienen 2014 in Academic Press (Elsevier), USA), können aber auch gänzlich oder teilweise regelbasiert oder statistisch bzw. datengestützt/empirisch sein. Die Modelle sind i.d.R. sogenannte Punktmodelle. Hierbei werden die Modelle i.d.R. so kalibriert, dass der Output die räumliche Repräsentanz des Inputs wiederspiegelt. Ist der Input an einem Punkt im Raum erhoben oder wird für einen Punkt im Raum interpoliert oder geschätzt, so wird i.d.R. angenommen, dass der Modelloutput für das gesamte angrenzende Feld gültig ist. Eine Anwendung von auf Feldebene kalibrierten sog. Punktmodellen auf weitere, i.d.R. gröbere Skalen ist bekannt (Hoffmann et al., 2016). Eine Anwendung dieser sog. Punktmodelle auf mehrere Punkte innerhalb eines Feldes ermöglicht hierbei eine teilflächenspezifische Modellierung.

Beispiele für dynamische, prozessbasierte Pflanzenwachstumsmodelle sind Apsim, Lintul, Epic, Hermes, Monica, STICS u.a. Ein Vergleich der Modelle und entsprechende Literatur zu den Modellen kann z.B. der folgenden Veröffentlichung und den darin aufgeführten Verweisen entnommen werden: Hoffmann H, Zhao G, Asseng S, Bindi M, Biernath C, Constantin J, Coucheney E, Dechow R, Doro L, Eckersten H, Gaiser T, Grosz B, Heinlein F, Kassie BT, Kersebaum K-C, Klein C, Kuhnert M, Lewan E, Moriondo M, Nendel C, Priesack E, Raynal H, Roggero PP, Rötter RP, Siebert S, Specka X, Tao F, Teixeira E, Trombi G, Wallach D, Weihermüller L, Yeluripati J, Ewert F. 2016. Impact of spatial soil and climate input data aggregation on regional yield simulations. PLoS ONE 11(4): e0151782. doi:10.1371/journal.pone.0151782.

In die Modellierung fließen vorzugsweise ein oder mehrere der folgenden Parameter ein (Input):
a) Wetter: tägliche Niederschlagssummen, Strahlungssummen, Tagesminimum und -maximum der Lufttemperatur sowie Temperatur in Bodennähe sowie Bodentemperatur, Windgeschwindigkeit, u.a.
b) Boden: Bodentyp, Bodentextur, Bodenart, Feldkapazität, Permanenter Welkepunkt, Organischer Kohlenstoff, mineralischer Stickstoffgehalt, Lagerungsdichte, Van-Genuchten-Parameter, u.a.
c) Kulturpflanze: Art, Sorte, sortenspezifische Parameter wie z.B. Spezifischer Blattflächenindex, Temperatursummen, maximale Wurzeltiefe, u.a.
d) Kulturmaßnahmen: Saatgut, Aussaattermin, Aussaatdichte, Aussaattiefe, Düngemittel, Düngemenge, Anzahl an Düngeterminen, Düngetermin, Bodenbearbeitung, Ernterückstände, Fruchtfolge, Distanz zum Feld gleicher Kultur im Vorjahr, Bewässerung, u.a.

In einem Ausführungsbeispiel werden beim Pflanzenwachstumsmodell meteorologische Daten verwendet, die Einfluss auf den Wert oder die Ausprägung der Pflanzeneigenschaft haben können. Beispielsweise können - vorzugsweise in hoher räumlicher Auflösung - die Lufttemperatur, die Luftfeuchtigkeit, die Sonnenstunden und/oder Niederschlagsmengen berücksichtigt werden. Diese Größen haben einerseits entscheidenden Einfluss auf das Wachstum der Nutzpflanze und beeinflussen somit eine Vielzahl von Pflanzeneigenschaften. Andererseits können sie auch einen unmittelbaren Einfluss auf gewisse Pflanzeneigenschaften wie beispielsweise die Strohfeuchte haben.

In dem erfindungsgemäßen Verfahren können auch Bodendaten verwendet werden, die Einfluss auf das Wachstum der Nutzpflanze haben. Beispielsweise kann für ein Flächenelement des Felds zu unterschiedlichen Zeitpunkten in der Wachstumsperiode der Wassergehalt des Bodens errechnet werden. Anhand dieses Wertes kann das Pflanzenwachstumsmodell dann die Menge an Wasser modellieren, die die Nutzpflanze dem Boden entzieht. Der Wassergehalt des Bodens, vorzugsweise auch hier dargestellt in hoher räumlicher Auflösung für einzelne Flächenelemente, kann dabei auch unter Berücksichtigung der meteorologischen Daten berechnet werden.

In einem weiteren Schritt des erfindungsgemäßen Verfahrens werden zu den erfassten Rohmesswerten korrespondierende Werte der digitalen Karte des Feldes identifiziert. Dabei sind die Rohmesswerte mit den korrespondierenden Werten der digitalen Karte über die jeweiligen Positionen (Geokoordinaten) verbunden. Die Bestimmung der Position erfolgt im Fall der Erfassung der Rohmesswerte mit Hilfe des Positionsbestimmungssystems. Die digitale Karte verfügt über entsprechende Koordinatenangaben (Geokoordinaten).

Die Zuordnung von einem Rohmesswert zu einem Wert (oder mehrere Werten) der digitalen Karte erfolgt damit vorzugsweise auf Basis der Geokoordinaten.

In einem weiteren Schritt des erfindungsgemäßen Verfahrens wird aus dem erfassten Rohmesswert und dem dazu korrespondierenden Wert der digitalen Karte ein kalibrierter oder korrigierter Wert für die Pflanzeneigenschaft ermittelt.

Die externen Daten, die in einer Speichereinheit hinterlegt sind, werden erfindungsgemäß also dazu genutzt, auf Basis des Rohmesswerts einen kalibrierten oder korrigierten Wert für die Pflanzeneigenschaft zu ermitteln.

Die externen Daten können auch als offline-Daten bezeichnet werden, die zur Kalibrierung von online-Daten (hier Rohmesswerte) verwendet werden. Mit anderen Worten dienen die offline-Daten in einer Ausführungsform der vorliegenden Erfindung zur Parametrisierung der Messvorrichtung, sodass die gemessenen Werte genauer sind bzw. aus diesen Werten die richtigen Schlüsse hinsichtlich einer oder mehrerer Pflanzeneigenschaften gezogen werden können.

Die Messwerte der Messvorrichtung können beispielsweise anhand von Daten eines Pflanzenwachstumsmodells abgeglichen werden. Aus diesem Abgleich lassen sich die Messwerte kalibrieren oder besser deuten. Detektiert beispielsweise die Messvorrichtung bestimmte spektrale Auffälligkeiten der Nutzpflanze, die sowohl auf eine Pflanzenkrankheit A als auch auf eine andere Pflanzenkrankheit B hindeuten können, kann mit Hilfe des Pflanzenwachstumsmodell aufgrund des bisherigen Wachstums und der sich daraus ergebenen Pflanzeneigenschaften die Wahrscheinlichkeit abgeschätzt werden, ob es sich eher um die Pflanzenkrankheit A oder die Pflanzenkrankheit B handelt. Hat beispielsweise die Nutzpflanze eine extrem feuchte Vergangenheit hinter sich, was über meteorologische Daten im Pflanzenwachstumsmodell abgebildet werden kann, könnte dies die Pflanzenkrankheit A wesentlich wahrscheinlicher machen als Pflanzenkrankheit B. Möglicherweise könnten mit Hilfe des Pflanzenwachstumsmodells trotz gemessener Auffälligkeiten sogar beide Krankheiten als unwahrscheinlich eingestuft werden, da eine besondere Trockenheit die Ursache der gemessenen Auffälligkeiten ist. So kann das Pflanzenwachstumsmodell helfen, die (Roh-)Messwerte der Messvorrichtung richtig zu interpretieren.

Das Pflanzenwachstumsmodell kann je nach Datenauflösung, Heterogenität des Feldes und/oder nach Intensität der Produktion Werte modellieren, die sich auf ein ganzes Feld oder nur für sehr kleine Flächeneinheiten wie ein Pixel von 1 x 1 m beziehen, so dass sich in hoher räumlicher Auflösung unterschiedliche Ergebnisse ergeben können. Auch kann vorgesehen sein, dass beispielsweise in Abhängigkeit des Orts unterschiedliche Pflanzenwachstumsmodelle oder besondere Module des Pflanzenwachstumsmodells zum Einsatz kommen, wenn für bestimmte Gebiete eine besonders differenzierte Betrachtung/Modellierung notwendig erscheint.

Wird nun durch die Messvorrichtung, die den oben beschriebenen N-Sensors beinhalten kann, beispielsweise über das Reflexionsverhalten der Nutzpflanze dessen Stickstoffgehalt ermittelt, können die externen Daten aus der Speichereinheit in einem ersten Schritt für die Kalibrierung des N-Sensors genutzt werden. Die externen Daten können die Sorte der Nutzpflanze und/oder auch die Eigenschaften des Pflanzenbestands betreffen, die Einfluss auf den Zusammenhang zwischen dem Reflexionsverhalten und dem Stickstoffgehalt in der Pflanze haben. Die Kalibrierung kann in einer Ausführung ausschließlich auf den externen Daten der Speichereinheit basieren oder in einer anderen Ausführung zumindest bei der Kalibrierung auf dem Feld berücksichtigt werden. Der Messwert des N-Sensors ohne Berücksichtigung der externen Daten kann als Rohmesswert aufgefasst werden.

In einem zweiten Schritt kann der (vor-)kalibrierte Rohmesswert dahingehend noch verfeinert werden, indem über die externen Daten auch Informationen über den Stickstoffgehalt des Bodens berücksichtigt werden. Basierend auf den Rohmesswert und der ersten Kalibrierung (Stickstoffgehalt in der Pflanze) und der zweiten Kalibrierung (Stickstoffgehalt im Boden) kann dann ein Messwert für den Gesamtstickstoffgehalt einschließlich des Bodenstickstoffs ermittelt werden. Ein derartiger Messwert bietet hinsichtlich der Entscheidung, welche zusätzliche Stickstoffmenge die Nutzpflanze für das weitere Wachstum benötigt, eine viel bessere Grundlage als ein Messwert ohne Nutzung der externen Daten.

Die digitale Karte des Feldes mit den Werten einer oder mehrerer Eigenschaften des Feldes (externe Daten) liegen in einer Speichereinheit vor, auf die von der Messvorrichtung zugegriffen werden kann.

In einem Ausführungsbeispiel ist die Speichereinheit als eine externe Speichereinheit beispielsweise in Form eines Servers ausgebildet, auf den die Messvorrichtung zugreifen kann bzw. der mit der Messvorrichtung in Verbindung steht. Beispielsweise kann es sich um eine webbasierte Plattform handeln, bei der sich ein Nutzer mit der Messvorrichtung vor Beginn der Messung einloggt und somit Zugriff auf die externen Daten bzw. offline-Daten des Servers hat. In Abhängigkeit der augenblicklichen Position der Messvorrichtung oder einer entsprechenden Eingabe des zu bearbeitenden Feldes können über die Plattform die externen Daten geliefert werden, die für die Parametrisierung des in Einsatz kommenden Sensors von Relevanz sind. Möglicherweise wird erst durch das Einloggen das Pflanzenwachstumsmodell gestartet, welches unter Berücksichtigung aktueller Wetterdaten bestimmte Pflanzeneigenschaften für den Zeitpunkt der Messung in einer gewissen räumlichen Auflösung berechnet. Selbst wenn diese Daten erst auf Anforderung berechnet werden, soll es sich um die besagten externen Daten bzw. offline-Daten handeln, da sie von den aktuellen Messergebnissen unabhängig sind. Auch kann vorgesehen sein, dass durch den Betrieb der Messvorrichtung die externen Daten automatisch angefordert bzw. ermittelt werden.

Die Verbindung zwischen der externen Speichereinheit und der Messvorrichtung erfolgt vorzugsweise drahtlos, beispielsweise über das Internet. Grundsätzlich ist es auch möglich, dass ein transportables Speichermedium wie ein USB-Stick, auf dem die externen Daten gespeichert sind, an der Messvorrichtung angeschlossen wird. Die externen Daten auf dem Speichermedium können sich dabei auch auf einen Zeitpunkt beziehen, der in etwa dem Zeitpunkt der Messung entspricht.

Der von der Messvorrichtung ermittelte Wert der Pflanzeneigenschaft unter Berücksichtigung der externen Daten wird in einem Ausführungsbeispiel für die Ansteuerung eines landwirtschaftlichen Aktuators verwendet. Der landwirtschaftliche Aktuator kann beispielsweise eine Pumpe einer Feldspritze sein, durch die ein Pflanzenschutzmittel in flüssiger Form auf das Feld aufgetragen wird. Die Messvorrichtung ermittelt dabei zunächst den Rohmesswert für eine bestimmte Pflanzeneigenschaft, welcher dann unter Berücksichtigung der externen Daten korrigiert bzw. kalibriert wird. Auf Basis dieses korrigierten oder kalibrierten Messwerts kann dann die Pumpe angesteuert werden. Wenn durch die Messvorrichtung für ein bestimmtes Flächenelement beispielsweise ein hoher Grad an Unkraut detektiert wird, wird entsprechend der Druck in der Pumpe der Feldspritze erhöht, wodurch eine größere Menge an Herbiziden für dieses Flächenelement aufgetragen wird. Weist hingegen der durch die externe Daten korrigierte/kalibrierte Messwert kein oder nur wenig Unkraut auf, so kann für das betreffende Flächenelement der Druck der Pumpe reduziert oder auf null gesetzt werden. Eine andere Möglichkeit, Einfluss auf die Auftragsmenge zu nehmen, besteht in der Variation eines Düsenquerschnitts. Je kleiner der Düsenquerschnitt, desto weniger Flüssigkeit wird auf das Feld aufgetragen.

Eine weitere Möglichkeit der variablen Dosierung besteht darin, bei einer Feldspritze das Verhältnis von Wasser und dem einzusetzen Pflanzenschutzmittel oder Düngermittel zu variieren. Bei Flächenelementen, die laut korrigiertem Messwert weniger Pflanzenschutz- oder Düngemittel benötigen, wird dessen Anteil im Gemisch reduziert. Auch die Tröpfchengröße des auszubringenden Mittels, welche sich durch den Ausbringungsdruck und/oder durch das Vorsehen eines Druckluftstroms einstellen lässt, kann in Abhängigkeit des korrigierten Messwerts variiert werden.

Mögliche Variationen bei einer Sämaschine, um auf besondere Bodenverhältnisse reagieren zu können, ergeben sich beispielsweise durch eine differenzierte Dosierung eines Beizmittels, mit dem das Saatgut beschichtet ist, unterschiedlich große Sätiefen oder unterschiedlich große Saatabstände.

In Abhängigkeit von korrigierten Messwerten der Messvorrichtung in einer gewissen räumlichen Auflösung kann auch eine Drohne angesteuert werden, die dann einem bestimmten Flugmuster folgt und dabei in Abhängigkeit des augenblicklichen Ortes eine dosierte Menge an Pflanzenschutz- oder Düngemittel freisetzt.

Anhand eines Ausführungsbeispiels soll die Erfindung näher erläutert werden. Auf ein Feld soll durch Einsatz einer Feldspritze Stickstoff aufgetragen werden. Zur online-Erfassung des Stickstoffgehalts der Nutzpflanze bzw. des Pflanzenstands auf dem Feld weist die Feldspritze einen N-Sensor auf. Bevor der Auftrag beginnt, wird über ein Einloggen auf einer webbasierten Plattform eine Verbindung zwischen der Feldspritze und einem zentralen Server hergestellt. Nach Eingabe der örtlichen Koordinaten des Felds bzw. von Daten, die das Feld eindeutig identifizieren, stellt der Server externe Daten bzw. offline-Daten zur Verfügung, die mehrere Pflanzeneigenschaften der Nutzpflanze auf dem Feld beschreiben. Die Daten basieren dabei auf Ergebnissen eines Pflanzenwachstumsmodells, das für den aktuellen Zeitpunkt eine Vielzahl von Pflanzeneigenschaften der Nutzpflanze modelliert. Auch kann das aktuelle Wetter und zusätzlich die voraussichtliche Wetterentwicklung zur Verfügung gestellt werden, wenn das Pflanzenwachstumsmodell ein entsprechendes Wettervorhersage-Modul aufweist.

Anhand der übermittelten Pflanzeneigenschaften (zum Beispiel Getreidesorte, Biomassestand) wird der N-Sensor parametrisiert, so dass eine vergleichsweise gute Einschätzung des Stichstoffgehalts der Nutzpflanze möglich ist. Um die erforderliche Menge an Stickstoff bzw. des Stickstoffträgers zu berechnen, werden der Feldspritze auch Daten bezüglich des Stickstoffgehalts des Bodens übermittelt. Diese Bodendaten berücksichtigen bereits in der Vergangenheit getätigte Stickstoffgaben sowie die (modellierte) Entwicklung der Nutzpflanze bis zum aktuellen Zeitpunkt. Aus diesen Daten wird dann die Auftragsmenge berechnet und, möglichst in hoher räumlicher Auflösung, flächenspezifisch auf das Feld aufgetragen. Die Berechnung der Auftragsmenge kann durch einen Prozessor der Feldspritze erfolgen. Grundsätzlich ist es aber auch möglich, dass die Auftragsmengen vom Server berechnet werden. Dem Server werden dabei die Messergebnisse des N-Sensors überspielt. Als Antwort sendet der Server dann Daten bezüglich der Aufbringungsmenge. Die Daten der aufzubringenden Mengen bzw. die tatsächlich aufgebrachten Mengen können dann auf dem Server abgespeichert werden. Diese Daten dienen dann als Grundlage für die weitere Modellierung des Pflanzenwachstums und können bei der nächsten anstehenden landwirtschaftlichen Maßnahme (zum Beispiel nochmalige Stickstoffgabe oder Ernte) berücksichtigt werden. Es versteht sich, dass das hier aufgeführte Ausführungsbeispiel exemplarisch auch für die Ausbringung von Pflanzenschutzmitteln oder anderen landwirtschaftlichen Maßnahmen stehen soll.

## Patentansprüche

1. Verfahren umfassend die Schritte
• Bewegen einer Messvorrichtung durch oder über ein Feld, in dem Nutzpflanzen angebaut werden, wobei die Messvorrichtung einen Sensor und ein Positionsbestimmungssystem umfasst
• Erfassen von Rohmesswerten bezüglich einer Pflanzeneigenschaft der Nutzpflanzen mit Hilfe des Sensors unter gleichzeitiger Bestimmung der Position der Messvorrichtung in oder über dem Feld mit Hilfe des Positionsbestimmungssystems
• Bereitstellen einer digitalen Karte des Feldes, in der teilflächenspezifisch Werte für mindestens eine Eigenschaft des Feldes verzeichnet sind,
• Identifizieren des/der zu einem erfassten Rohmesswert in Bezug auf die Position korrespondierenden Werts/Werte der digitalen Karte, **gekennzeichnet durch**
• Ermitteln eines kalibrierten oder korrigierten Wertes für die Pflanzeneigenschaft aus dem erfassten Rohmesswert und dem/den korrespondierenden Wert/Werten der digitalen Karte.

2. Verfahren nach Anspruch 1, **dadurch gekennzeichnet, dass** die Werte der digitalen Karte die Ergebnisse eines Pflanzenwachstumsmodells sind, welches für einen Zeitpunkt, an dem die Messvorrichtung den Rohmesswert für die Pflanzeneigenschaft ermittelt, wenigstens eine Eigenschaft des Feldes modelliert.

3. Verfahren nach einem der Ansprüche 1 bis 2, **dadurch gekennzeichnet, dass** sich aus Rohmesswerten der Stickstoffgehalt der Nutzpflanzen ermitteln lässt, während in der digitalen Karte des Feldes der Stickstoffgehalt des Bodens verzeichnet ist und die korrigierten Werte der Pflanzeneigenschaft den Gesamtstickstoffgehalt der Nutzpflanze einschließlich des noch im Boden befindlichen Stickstoffgehalts angeben.

4. Verfahren nach einem der Ansprüche 1 bis 2, **dadurch gekennzeichnet, dass** sich aus den Rohmesswerten ein Stickstoffgehalt der Nutzpflanzen ermitteln lässt, während in der digitalen Karte des Feldes das Wachstumsstadium der angebauten Nutzpflanzen verzeichnet ist und die kalibrierten Werte der Pflanzeneigenschaft den auf Basis des jeweils vorliegenden Wachstumsstadiums kalibrierten Stickstoffgehalt der Nutzpflanze angeben

5. Verfahren nach einem der Ansprüche 1 bis 2, **dadurch gekennzeichnet, dass** die Messvorrichtung einen Sensor für die tatsächlich geerntete Nutzpflanze umfasst.

6. Verfahren nach Anspruch 5, **dadurch gekennzeichnet, dass** mittels des Sensors das Gewicht des geernteten Korns gemessen wird, und in der digitalen Karte Werte für die Kornfeuchte verzeichnet sind, und aus dem Gewicht des geernteten Korns und der Kornfeuchte ein kalibriertes, auf eine bestimmte Kornfeuchte normiertes Korngewicht ermittelt wird.

7. Verfahren nach einem der Ansprüche 1 bis 6, **dadurch gekennzeichnet, dass** der Sensor auf einer Feldmaschine angebracht ist.

8. Verfahren nach Anspruch 7, **dadurch gekennzeichnet, dass** die Feldmaschine eine Erntemaschine, eine Auftragsmaschine für Pflanzenschutzprodukte oder Düngemittel, eine Sämaschine oder eine Pflanzmaschine ist.

9. Verfahren nach einem der Ansprüche 1 bis 8, **dadurch gekennzeichnet, dass** die digitale Karte des Feldes in einer Speichereinheit gespeichert ist, die in Form eines zentralen Servers ausgebildet ist.

10. Verfahren nach Anspruch 9, **dadurch gekennzeichnet, dass** die Übermittlung der externen Daten über eine drahtlose Verbindung zwischen der Messvorrichtung und dem Server erfolgt.

11. Verfahren nach einem der Ansprüche 1 bis 10, **dadurch gekennzeichnet, dass** der ermittelte kalibrierte oder korrigierte Wert der Pflanzeneigenschaft für die Ansteuerung eines landwirtschaftlichen Aktuators verwendet wird.

12. System umfassend
• eine Messvorrichtung mit einem Sensor und einem Positionsbestimmungssystem, wobei die Messvorrichtung so ausgestaltet ist, dass sie sich über oder durch ein Feld, in dem Nutzpflanzen angebaut werden, bewegt, dabei mittels des Sensors Rohmesswerte zu einer Pflanzeneigenschaft der Nutzpflanzen erfasst und gleichzeitig die Position der Messvorrichtung in oder über dem Feld mit Hilfe des Positionsbestimmungssystems bestimmt,
• eine Speichereinheit, in der eine digitale Karte des Feldes gespeichert ist, wobei in der digitalen Karte teilflächenspezifisch Werte für mindestens eine Eigenschaft des Feldes verzeichnet sind, und
• eine Computereinheit, die so konfiguriert ist, dass sie
- einen Rohmesswert von der Messvorrichtung zusammen mit den Koordinaten der Position, an der sich die Messvorrichtung zum Zeitpunkt der Erfassung des Rohmesswerts befunden hat, empfängt
- den zum Rohmesswert korrespondierenden Wert der digitalen Karte identifiziert, und
**dadurch gekennzeichnet, dass** die Computereinheit
- aus dem Rohmesswert und dem korrespondierenden Wert der digitalen Karte einen kalibrierten oder korrigierten Wert für die Pflanzeneigenschaft berechnet.

13. System nach Anspruch 12, weiterhin umfassend einen landwirtschaftlichen Aktuator, wobei die Computereinheit so konfiguriert ist, dass sie den berechneten kalibrierten oder korrigierten Wert für die Pflanzeneigenschaft für die Ansteuerung des landwirtschaftlichen Aktuators verwendet.

14. Computerprogrammprodukt umfassend einen computerlesbaren Datenträger und Programmcode, der auf dem Datenträger gespeichert ist, und der beim Ausführen auf einem Computer den Computer dazu veranlasst,
• von einer Messvorrichtung einen Rohmesswert bezüglich einer Pflanzeneigenschaft einer Nutzpflanze in einem Feld und die Koordinaten derjenigen Position im oder über dem Feld zu empfangen, an der sich die Messvorrichtung zum Zeitpunkt der Erfassung des Rohmesswertes mit Hilfe eines Sensors befunden hat,
• einen zu dem Rohmesswert korrespondierenden Wert einer Eigenschaft des Feldes von einer digitalen Karte des Feldes zu identifizieren, und **gekennzeichnet durch**
• aus dem Rohmesswert und dem korrespondierenden Wert einer Eigenschaft des Feldes einen kalibrierten oder korrigierten Wert für die Pflanzeneigenschaft zu berechnen.

15. Computerprogrammprodukt nach Anspruch 14, wobei der Computer ferner dazu veranlasst wird, den berechneten kalibrierten oder korrigierten Wert für die Pflanzeneigenschaft zur Ansteuerung eines landwirtschaftlichen Aktuators zu verwenden.

## Claims

1. A method comprising the steps
• moving a measurement device through or over a field in which useful plants are being grown, wherein the measurement device comprises a sensor and a position determining system
• capturing raw measured values relating to a plant property of the useful plants by means of the sensor with simultaneous determination of the position of the measurement device in or over the field by means of the position determining system
• providing a digital map of the field, in which subarea-specific values for at least one property of the field are listed,
• identifying the value/values of the digital map corresponding to a raw measured value captured with regard to the position, by
• ascertaining a calibrated or corrected value for the plant property from the raw measured value captured and the corresponding value/values of the digital map.

2. The method as claimed in claim 1, wherein the values of the digital map are the results of a plant growth model which models at least one property of the field for a time-point at which the measurement device ascertains the raw measured value for the plant property.

3. The method as claimed in one of claims 1 to 2, wherein the nitrogen content of the useful plants can be ascertained from raw measured values, while in the digital map of the field the nitrogen content of the soil is listed and the corrected values of the plant property state the total nitrogen content of the useful plant including the nitrogen content still located in the soil.

4. The method as claimed in one of claims 1 to 2, wherein a nitrogen content of the useful plants can be ascertained from raw measured values, while in the digital map of the field the growth stage of the useful plants being grown is listed and the calibrated values of the plant property state the calibrated nitrogen content of the useful plant on the basis of the growth stage present at the time.

5. The method as claimed in one of claims 1 to 2, wherein the measurement device comprises a sensor for the actually harvested useful plant.

6. The method as claimed in claim 5, wherein by means of the sensor the weight of the harvested grain is measured, and values for the grain moisture content are recorded in the digital map, and from the weight of the harvested grain and the grain moisture content a calibrated grain weight normalized to a defined grain moisture content is ascertained.

7. The method as claimed in one of claims 1 to 6, wherein the sensor is attached on a field machine.

8. The method as claimed in claim 7, wherein the field machine is a harvesting machine, an application machine for pesticides or fertilizers, a sowing machine or a planting machine.

9. The method as claimed in one of claims 1 to 8, wherein the digital map of the field is stored in a memory unit which is designed in the form of a central server.

10. The method as claimed in claim 9, wherein the transfer of the external data is effected via a wireless connection between the measurement device and the server.

11. The method as claimed in one of claims 1 to 10, wherein the ascertained calibrated or corrected value of the plant property is used for the control of an agricultural actuator.

12. A system comprising
• a measurement device with a sensor and a position determining system wherein the measurement device is designed such that it moves over or through a field in which useful plants are being grown, and thereby by means of the sensor captures raw measured values relating to a plant property of the useful plants and simultaneously determines the position of the measurement device in or over the field by means of the position determining system
• a memory unit in which a digital map of the field is stored, wherein subarea-specific values for at least one property of the field are listed in the digital map, and
• a computer unit which is configured such that it
- receives a raw measured value from the measurement device together with the coordinates of the position at which the measurement device was located at the time of the capture of the raw measured value
- identifies the value of the digital map corresponding to the raw measured value, and
wherein the computer unit
- calculates a calibrated or corrected value for the plant property from the raw measured value and the corresponding value of the digital map.

13. The system as claimed in claim 12, further comprising an agricultural actuator, wherein the computer unit is configured such that it uses the calculated calibrated or corrected value for the plant property for the control of the agricultural actuator.

14. A computer program product comprising a computer-readable data storage device and program code which is stored on the data storage device, and which on execution on a computer causes the computer to
• receive from a measurement device a raw measured value relating to a plant property of a useful plant in a field and the coordinates of its position in or over the field at which the measurement device was located at the time-point of the capture of the raw measured value by means of a sensor,
• identify from a digital map of the field a value of the property of the field corresponding to the raw measured value, and wherein
• a calibrated or corrected value for the plant property is calculated from the raw measured value and the corresponding value of a property of the field.

15. The computer program product as claimed in claim 14, wherein further the computer is caused to use the calculated calibrated or corrected value for the plant property for the control of an agricultural actuator.

## Revendications

1. Procédé comprenant les étapes suivantes
• déplacer un dispositif de mesure à travers ou au-dessus d'un champ dans lequel poussent des plantes utiles, le dispositif de mesure comprenant un capteur et un système de détermination de position,
• acquérir des valeurs de mesure brutes concernant une caractéristique des plantes utiles à l'aide du capteur tout en déterminant en même temps la position du dispositif de mesure dans le champ ou au-dessus de celui-ci à l'aide du système de détermination de position
• fournir une carte numérique du champ dans laquelle sont répertoriées des valeurs spécifiques à des parcelles pour au moins une propriété du champ,
• identifier la ou les valeurs de la carte numérique qui correspondent à une valeur de mesure brute acquise concernant la position, **caractérisé par** l'étape suivante
• déterminer une valeur calibrée ou corrigée pour la propriété de plantes à partir de la valeur de mesure brute acquise et de la ou des valeurs correspondantes de la carte numérique.

2. Procédé selon la revendication 1, **caractérisé en ce que** les valeurs de la carte numérique sont les résultats d'un modèle de croissance de plantes qui modélise au moins une propriété du champ pour un instant auquel le dispositif de mesure détermine la valeur de mesure brute de la propriété de plantes.

3. Procédé selon l'une des revendications 1 à 2, **caractérisé en ce que** la teneur en azote des plantes utiles peut être déterminée à partir de valeurs de mesure brutes, tandis que la teneur en azote du sol est enregistrée dans la carte numérique du champ et les valeurs corrigées de la propriété de plantes indiquent la teneur en azote totale de la plante y compris la teneur en azote encore dans le sol.

4. Procédé selon l'une des revendications 1 à 2, **caractérisé en ce qu'**une teneur en azote des plantes utiles peut être déterminée à partir des valeurs de mesure brutes, tandis que le stade de croissance des plantes utiles cultivées est enregistré dans la carte numérique du champ et les valeurs calibrées de la propriété de plantes indiquent la teneur en azote de la plante utile qui est calibrée sur la base du stade de croissance en présence.

5. Procédé selon l'une des revendications 1 à 2, **caractérisé en ce que** le dispositif de mesure comprend un capteur destiné à la plante utile effectivement récoltée.

6. Procédé selon la revendication 5, **caractérisé en ce que** le poids du grain récolté est mesuré au moyen du capteur, et des valeurs d'humidité du grain sont enregistrées dans la carte numérique, et un poids de grain calibré, normalisé à une humidité de grain spécifique, est déterminé à partir du poids du grain récolté et de l'humidité du grain.

7. Procédé selon l'une des revendications 1 à 6, **caractérisé en ce que** le capteur est monté sur une machine agricole.

8. Procédé selon la revendication 7, **caractérisé en ce que** la machine agricole est une moissonneuse, une machine d'épandage de produits phytosanitaires ou d'engrais, un semoir ou une planteuse.

9. Procédé selon l'une des revendications 1 à 8, **caractérisé en ce que** la carte numérique du champ est mémorisée dans une unité de mémorisation qui est conçue sous la forme d'un serveur central.

10. Procédé selon la revendication 9, **caractérisé en ce que** les données externes sont transmises par le biais d'une liaison sans fil entre le dispositif de mesure et le serveur.

11. Procédé selon l'une des revendications 1 à 10, **caractérisé en ce que** la valeur calibrée ou corrigée déterminée de la propriété de plante est utilisée pour commander un actionneur agricole.

12. Système comprenant
• un dispositif de mesure muni d'un capteur et d'un système de détermination de position, le dispositif de mesure étant conçu de manière à se déplacer sur ou à travers un champ dans lequel poussent des plantes utiles, acquérir à l'aide du capteur des valeurs de mesure brutes relatives à une propriété des plantes utile et en même temps déterminer la position du dispositif de mesure dans ou au-dessus du champ à l'aide du système de détermination de positionnement,
• une unité de mémorisation dans laquelle une carte numérique du champ est mémorisée, des valeurs spécifiques à des parcelles et relatives à au moins une propriété du champ étant enregistrées dans la carte numérique, et
• une unité informatique qui est configurée pour
- recevoir une valeur de mesure brute du dispositif de mesure conjointement avec les coordonnées de la position où se trouvait le dispositif de mesure au moment de l'acquisition de la valeur de mesure brute,
- identifier la valeur de la carte numérique qui correspond à la valeur de mesure brute, et **caractérisé en ce que** l'unité informatique
- calcule une valeur calibrée ou corrigée relative à la propriété de plante à partir de la valeur de mesure brute et de la valeur correspondante de la carte numérique.

13. Système selon la revendication 12, comprenant en outre un actionneur agricole, l'unité informatique étant configurée pour utiliser la valeur calibrée ou corrigée, qui est été calculée, relative à la propriété de plante, pour commander l'actionneur agricole.

14. Progiciel comprenant un support de données lisible par ordinateur et un code de programme qui est mémorisé sur le support de données et qui, lorsqu'il est exécuté sur un ordinateur, amène l'ordinateur à
• recevoir d'un dispositif de mesure une valeur de mesure brute relative à une propriété d'une plante utile dans un champ et les coordonnées de cette position dans ou au-dessus du champ où se trouvait le dispositif de mesure au moment où la valeur de mesure brute a été acquise à l'aide d'un capteur,
• identifier une valeur d'une propriété du champ qui correspond à la valeur de mesure brute d'une carte numérique du champ, et **caractérisé par** l'étape suivante
• calculer une valeur calibrée ou corrigée relative à la propriété de la plante à partir de la valeur de mesure brute et de la valeur correspondante d'une propriété du champ.

15. Progiciel selon la revendication 14, l'ordinateur étant en outre amené à utiliser la valeur calibrée ou corrigée, qui a été calculée, relative à la propriété de plante, pour commander un actionneur agricole.
